# EUROPEAN PATENT SPECIFICATION

(11) **EP 2 670 088 B1**
(45) Date of publication and mention of the grant of the patent: **04.11.2015**
(21) Application number: 11859591.7
(22) Date of filing: 01.12.2011
(51) Int. Cl.: H04L 12/46, H04L 12/721

(54) **TRILL NETWORK INTERCONNECTION METHOD AND SYSTEM**
VERBINDUNGSVERFAHREN UND SYSTEM FÜR TRILL-NETZWERK
PROCÉDÉ ET SYSTÈME D'INTERCONNEXION AVEC UN RÉSEAU TRILL

(30) Priority: 21.02.2011 CN 201110041930
(43) Date of publication of application: 04.12.2013
(73) Proprietor: ZTE Corporation, Shenzhen, Guangdong 518057 (CN)
(72) Inventor: ZHAI, Hongjun, Shenzhen Guangdong 518057 (CN); CHENG, Mingjiang, Shenzhen Guangdong 518057 (CN); ZHAO, Jingjing, Shenzhen Guangdong 518057 (CN); XIAO, Min, Shenzhen Guangdong 518057 (CN); JIN, Lizhong, Shenzhen Guangdong 518057 (CN); LV, Erchun, Shenzhen Guangdong 518057 (CN)
(74) Representative: Schröer, Gernot H.
(86) International application number: PCT/CN2011/083314
(87) International publication number: WO 2012/113251

(56) References cited:
- CN-A- 101 123 570
- CN-A- 101 771 607

## Description

### Technical Field

The invention relates to network communication technologies, and more especially, to a method and system for Transparent Interconnection of Lots of Links (TRILL) network interconnection.

### Background of the Related Art

TRILL (Transparent Interconnection of Lots of Links) is a Layer 2 (L2) network standard recommended by the Internet Engineering Task Force (IETF), which is used to solve the insufficiency of the Spanning Tree protocol (STP) in a large Data Center (DC). In the L2 network, the STP avoids loops by blocking redundant links, but also causes a waste of the bandwidth of the redundant links at the same time. The TRILL solves the problem of the L2 loop by introducing the routing protocol of the Intermediate System to Intermediate System (IS-IS) into the L2 network, while retaining the L2 multi path (or referred to as Equivalent Cost Multiple Path (ECMP)).

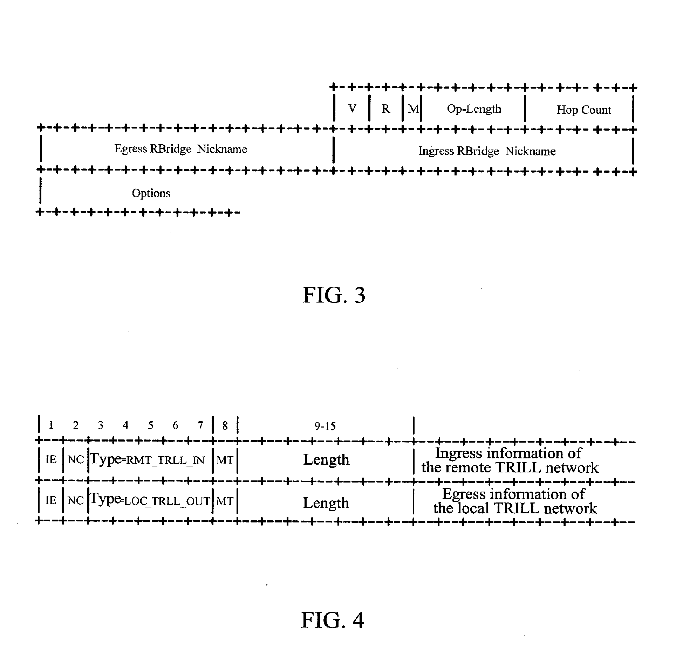

In the TRILL network, a device for performing the TRILL protocol is referred to as a RBridge (RB). In an ingress of the TRILL network, the RB which is responsible for encapsulating unicast data frames of the end system into a TRILL format (i.e., adding a TRILL header and an inner MAC frame header before the original data frames, the encapsulated data frames are called as TRILL data frames, as shown in FIG. 3) and injecting them into the TRILL network is referred to as Ingress; while in an egress of the TRILL network, a RB which is responsible for decapsulating the TRILL data frames into the original data frames and forwarding them to the end system is referred to as Egress. Except for the Ingress and Egress, other RBs are responsible for transmitting the TRILL data frames from the Ingress to the Egress hop by hop, and are referred to as transmission RBs (see for example document EP-A-2 202 923).

The application scenario of the TRILL is mainly the large DC. The intercommunication between the DCs is inevitable in the cloud computing, therefore, the interconnection between the TRILL networks is also an inevitable problem. Recently, the TRILL protocol specifically describes the technology of the control plane and the data plane in one TRILL network, but has not involved the field of the intercommunication between different TRILL networks. The interconnection between different TRILL networks is a hotspot discussed by the TRILL work group recently, and is still at the draft discussion and the submission phase.

In the recent DC interconnection technologies, a representative technology is Overlay Transport Virtualization (OTV) technology, which utilizes the encapsulation technology of MAC in IP to achieve the interconnection between DCs. In order to achieve the intercommunication between DCs, the border device of the DCs needs to store MAC address information (a MAC address information table between DCs) for arriving at devices in other DCs, and with the continuous increase of the interconnected DCs and with the continuous increase of the DC scale, this MAC address information table will rapidly expand to an unbearable extent. Therefore, the OTV technology is insufficient in the scale of the DC interconnection.

The invention provides a new solution of the TRILL network interconnection in view of the requirements of the TRILL network interconnection and the insufficiency of the OTV technology.

### Summary of the Invention

In view of this, the main purpose of the invention is to provide a method and system for TRILL network interconnection, which can meet the requirements of the TRILL network interconnection, and solve the problem of insufficiency of the OTV technology in the scale of the DC interconnection.

In order to achieve the above purpose, the technical solution according to the invention is as defined in the present independent claims and implemented as follows:
the invention provides a method of Transparent Interconnection of Lots of Links (TRILL) network interconnection, comprising:
   a Border RBridge (BRB) of a first TRILL network receiving TRILL data frames transmitted by a second TRILL network, and forwarding the TRILL data frames; a RBridge (RB) of the first TRILL network receiving the TRILL data frames transmitted by the BRB, learning path to the second TRILL network through control information in a TLV format distributed by the BRB or by observing the TRILL data frames, and forwarding decapsulated original data frames to a device identified by a destination MAC address; and
   the RB encapsulating the TRILL data frames according to the learned path information, and transmitting the TRILL data frames to the second TRILL network through the BRB, wherein, the BRB is an egress and ingress of the TRILL network; and at least one interface of the BRB is located within the TRILL network, and at least one interface is located within other non-TRILL networks; and
   the BRB has at least one globally unique identifier, which is an IP address or a MAC address or a Nickname.

The method further comprises: carrying egress information of a local TRILL network and/or ingress information of a remote TRILL network in a TRILL header of the TRILL data frames.

In the case that the RB of the first TRILL network learns the path to the second TRILL network through the control information in a TLV format distributed by the BRB, carrying the ingress information of the remote TRILL network in Egress field of a TRILL header of the TRILL data frames; and when the TRILL data frames leave the local TRILL network, the BRB carrying the egress information of the local TRILL network in Ingress field in the TRILL header of the TRILL data frames; and
in the case that the RB of the first TRILL network learns the path to the second TRILL network through the TRILL data frames, carrying the egress information of the local TRILL network and/or the ingress information of the remote TRILL network through sub-option fields of the TRILL header.

The method further comprises: the BRB advertising self-originated control information in a TLV format including the ingress BRB of other TRILL networks known by itself periodically or responding to the received request from other RBs within the local TRILL network, to notify other RBs of the local TRILL network of the ingress BRB of all the other TRILL networks which are known by itself; after receiving the control information in a TLV format, the RB calculating Equal-Cost Multipaths (ECMP) to the BRB included in the TLV, and storing the information in its ECMP table.

The method further comprises: the second TRILL network transmitting the TRILL data frames to the first TRILL network, comprising:
when receiving the TRILL data frames which leave the local TRILL network, the BRB of the second TRILL network re-encapsulating the received TRILL data frames, carrying the egress information of the local TRILL network in the TRILL header of the TRILL data frames, and transferring the re-encapsulated TRILL data frames to the BRB of the first TRILL network through other non-TRILL networks.

The step of the BRB of the first TRILL network forwarding the received TRILL data frames comprises:
after receiving and decapsulating the TRILL data frames, the BRB of the first TRILL network searching its MAC address information table for the destination MAC address in the inner data frame header, and acquiring a reachable RB connected to device identified by the destination MAC address;
the BRB of the first TRILL network re-encapsulating the received TRILL data frames, and forwarding the re-encapsulated TRILL data frames to the RB connected to the destination device.

In the case that the RB learns the path to the second TRILL network by observing the TRILL data frames, the step of the BRB of the first TRILL network re-encapsulating the received TRILL data frames comprises: setting the Ingress as itself, setting the Egress as the RB connected to the device identified by the destination MAC address, maintaining the sub-option fields of the TRILL header in the TRILL data frames unchanged, and maintaining an inner MAC frame header in the TRILL data frames unchanged;
in the case that the RB learns the path to the second TRILL network through the control information in a TLV format distributed by the BRB, the step of the BRB of the first TRILL network re-encapsulating the received TRILL data frames comprises: maintaining the Ingress unchanged, setting the Egress as the RB connected to the device identified by the destination MAC address; maintaining the sub-option fields of the TRILL header in the TRILL data frames unchanged, and maintaining the inner MAC frame header in the TRILL data frames unchanged.

The step of the RB of the first TRILL network encapsulating the TRILL data frames according to the learned path information comprises:
when the RB of the first TRILL network is Ingress, carrying the ingress information of the remote TRILL network in the TRILL header.

The RB of the first TRILL network transmits the encapsulated TRILL data frames to the BRB of the first TRILL network according to the learned path information, and then the DRB re-encapsulates the frames and transfers them to the BRB of the second TRILL network through other non-TRILL networks.

The invention further provides a system for TRILL network interconnection, comprising: a BRB and a RB, wherein,
when being located within a first TRILL network, the BRB is used to receive TRILL data frames transmitted by a second TRILL network and forward the TRILL data frames;
when being located within the first TRILL network, the RB is used to receive the TRILL data frames transmitted by the BRB, learn path to the second TRILL network through control information in a TLV format distributed by the BRB or by observing the TRILL data frames, and forward the decapsulated original data frames to a device identified by a destination MAC address; and is further used to encapsulate the TRILL data frames according to the learned path information, and transmit the TRILL data frames to the second TRILL network through the BRB, wherein, the BRB is an egress and ingress of the TRILL network; and
at least one interface of the BRB is located within the TRILL network, and at least one interface is located within other non-TRILL networks; and the BRB has at least one globally unique identifier, which is an IP address or a MAC address or a Nickname.

When being located within the second TRILL network, the BRB is further used to: when receiving the TRILL data frames which leave the local TRILL network, re-encapsulate the received TRILL data frames, carry the egress information of the local TRILL network in a TRILL header of the TRILL data frames, and transfer the re-encapsulated TRILL data frames to the BRB of the first TRILL network through other non-TRILL networks;
the egress information of the local TRILL network is a globally unique identifier of the egress BRB of the local TRILL network.

When being located within the first TRILL network, the BRB is further used to: after receiving the TRILL data frames transmitted by the second network and decapsulating the data frames, search its MAC address information table for the destination MAC in the inner MAC frame header, and acquire a reachable RB connected to the device identified by the destination MAC address; and is further used to re-encapsulate the received TRILL data frames, and forward the re-encapsulated TRILL data frames to the RB connected to the destination device.

In the case that the RB of the first TRILL network learns the path to the second TRILL network by observing the TRILL data frames, when re-encapsulating the received TRILL data frames, the BRB located within the first TRILL network is further used to set the Ingress as itself, set the Egress as the RB connected to the device identified by the destination MAC address, maintain the sub-option fields of the TRILL header in the TRILL data frames unchanged, and maintain an inner MAC frame header in the TRILL data frames unchanged;
in the case that the RB of the first TRILL network learns the path to the second TRILL network through the control information in a TLV format distributed by the BRB, when re-encapsulating the received TRILL data frames, the BRB located within the first TRILL network is further used to maintain the Ingress unchanged, set the Egress as the RB connected to the device identified by the destination MAC address, maintain the sub-option fields of the TRILL header in the TRILL data frames unchanged, and maintain the inner MAC frame header in the TRILL data frames unchanged.

When being located within the first TRILL network and is Ingress, the RB is further used to encapsulate the TRILL data frames according to the learned path information, carry the ingress information of a remote TRILL network in the TRILL header; the ingress information of the remote TRILL network is a globally unique identifier of the ingress BRB of the second TRILL network; and transmit the encapsulated TRILL data frames to the BRB of the first TRILL network according to the learned path information;
Correspondingly, when being located within the first TRILL network, the BRB is further used to transmit the received TRILL data frames to the BRB of the second TRILL network through other non-TRILL networks.

The egress information of the local TRILL network and the ingress information of the remote TRILL network are carried in the TRILL header of the TRILL data frames, comprising:
the RB of the first TRILL network carrying the ingress information of the remote TRILL network through the Egress of the TRILL header; and when the TRILL data frames leave the local network, the BRB carrying the egress information of the local TRILL network through the Ingress of the TRILL header.

The BRB is further used to advertise self-originated control information in a TLV format including the ingress BRB of other TRILL networks known by itself periodically or respond to the received request from other RBs within the local TRILL network, to notify other RBs of the local TRILL network of the ingress BRB of all the other TRILL networks which are known by itself; and the RB is further used to calculate the ECMPs to the BRBs included in the TLV, and store the ECMPs in its ECMP table, after receiving the control information in a TLV format.

Thus, the invention introduces the BRB by adding egress information of the local TRILL network and ingress information of the remote TRILL network in the TRILL header, which solves the problem of interconnecting multiple TRILL networks across a traditional network. Compared with the OTV technology, the BRB in the invention only needs to locally maintain the information for arriving at the BRBs of other TRILL networks without the need of maintaining the MAC address information for arriving at various devices in other TRILL networks, which solves the problem of mass MAC address information when a large number of TRILL networks are interconnected.

### Brief Description of Drawings

- FIG. 1: illustrates an encapsulation format of TRILL data frames when spanning across other networks;
- FIG. 2: illustrates the structure of interconnection of multiple TRILL networks;
- FIG. 3: illustrates the encapsulation format of a TRILL header; and
- FIG. 4: illustrates the options added in an options field of an extended TRILL header.

### Preferred Embodiments of the Invention

The basic idea of the TRILL network interconnection solution according to the invention is to introduce a BRB by adding egress information of a local TRILL network and ingress information of a remote TRILL network in a TRILL header, which solves the problem of interconnecting multiple TRILL networks across a traditional network, which specifically comprises: a BRB of a first TRILL network receiving TRILL data frames transmitted by a second TRILL network and forwarding the TRILL data frames; a RB of the first TRILL network receiving the TRILL data frames transmitted by the BRB, learning path to the second TRILL network through control information in a TLV format distributed by the BRB or through the TRILL data frames, forwarding the decapsulated original data frames to a device identified by the destination MAC address in inner MAC frame header; the RB encapsulating the TRILL data frames according to the learned path information and transmitting the TRILL data frames to the second TRILL network through the BRB.

The technical solution of the invention will be illustrated below with reference to specific embodiments, wherein, the first TRILL network and the second TRILL network can be transformed to a remote TRILL network or a local TRILL network according to the specific conditions in the subsequent embodiments.

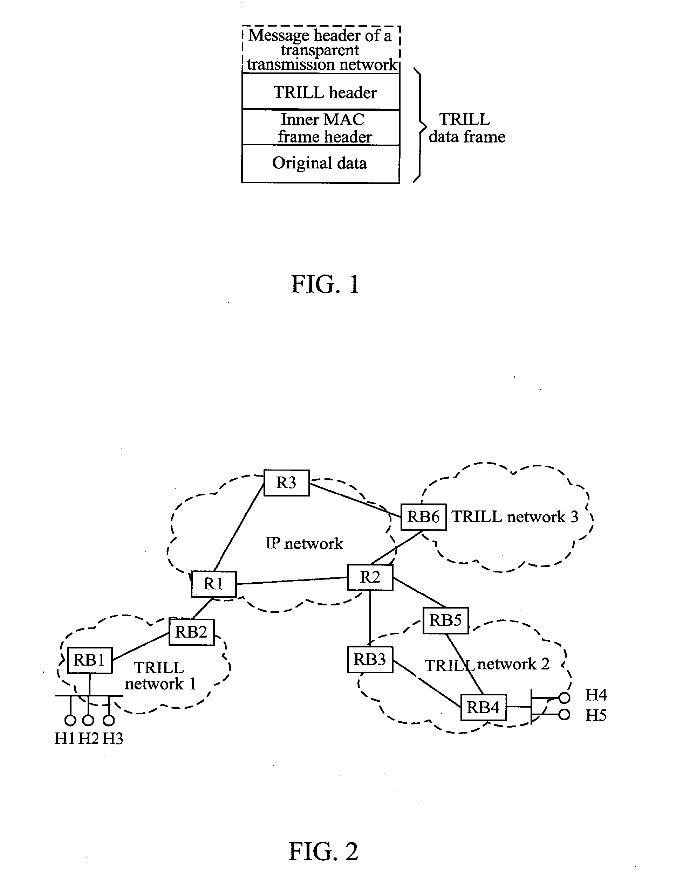

As shown in FIG. 1, one TRILL data frame is comprised of a TRILL header, an inner MAC frame header (including a source MAC address and a destination MAC address) and original data, and when the TRILL data frame needs to span across other non-TRILL networks, it needs to add a corresponding header before the TRILL header, and other non-TRILL networks transparently transmits the TRILL data frame and thus can be referred to as transparent transmission networks. For example, when the transparent transmission network is an IP network, it needs to add an IP header before the TRILL header for IP encapsulation; and if the transmission network is a MPLS network, it needs to add MPLS tag information before the TRILL header.

FIG. 2 is a diagram of the structure of interconnection of multiple TRILL networks, wherein, the multiple TRILL networks are interconnected through an IP network. Of course, the interconnection technology according to the invention is not limited to interconnecting the TRILL networks through the IP network, and the TRILL networks can also be interconnected through the MPLS network etc.

The interconnection solution according to the invention will be described below in combination with FIGS. 1 and 2.

In order to achieve the interconnection between different TRILL networks and solve the problem of interworking between DCs executing the TRILL protocol, the invention uses the following technical means:
first, a Border RBridge (RB) is defined in the TRILL networks.

Only RBs which meet the following conditions can be designated as the BRB: BRB is an egress and an ingress of a TRILL network, and has at least one interface which is located in the designated TRILL network, and has at least another interface which is located in other non-TRILL networks; in addition, the BRB represents one TRILL network logically, therefore, the BRB must have at least one globally unique identifier, for example, an IP address, or a MAC address, or a Nickname etc.

When the BRB is designated in the RBs which meet the above conditions, the designation can be implemented by way of manual configuration.

As shown in FIG. 2, if in the TRILL network 1, one interface of the RB2 is located in the IP network and other interfaces are located in the TRILL network 1, the RB2 can be designated as the BRB of the TRILL network 1; and similarly, the RB6 is designated as BRB in the TRILL network 2; and the RB3 and RB5 can be designated as BRB in the TRILL network 3.

For the interconnection between BRBs of different TRILL networks, the connectivity between BRBs of different TRILL networks can be implemented by way of manual configuration and/or with the aid of distribution mechanism of dynamic routing protocol etc.

The function of the BRB mainly implements the following extensions in relative to the RB:
1) For the TRILL data frames which leave the local TRILL network (i.e., the destination MAC address in the inner MAC frame header of the TRILL data frames is not in the local TRILL network), the BRB of the local TRILL network re-encapsulates the TRILL data frames, carries egress information of the local TRILL network in the TRILL header (when the TRILL data frames exit from the local TRILL network through the BRB, the egress information here is the globally unique identifier of the BRB), and forwards the encapsulated TRILL data frames to the BRB of the remote TRILL network (here, a normal RB discards the TRILL data frames);
2) The BRB decapsulates the TRILL data frames from the remote TRILL network, searches its MAC address information table according to the destination MAC address, determines whether to continue to forward or discard the TRILL data frames, and if it needs to continue to forward, re-encapsulates and then continues to forward the TRILL data frames.
3) In addition, the BRB needs to know all MAC address information of the local TRILL network.

Second, an sub-option is added in an options field (the options field as shown in FIG. 3) of the TRILL header, for recording the egress information and ingress information of the TRILL network. Wherein, when the TRILL data frames enter the TRILL network through a certain BRB, the ingress information of the TRILL network is the globally unique identifier of the BRB.

As shown in FIG. 4, two sub-option fields are added in the options field, i.e., an egress sub-option of the local TRILL network and an ingress sub-option of the local TRILL network, which store egress information of the local TRILL network and ingress information of the remote TRILL network respectively. The two sub-options are hop-by-hop non-critical options, that is, RBs which do not support the options only need to transparently transmit the options.

The egress information or ingress information of the TRILL network is the globally unique identifier of the BRB, which can be an IP address, or a MAC address or a Nickname, and specifically, one of the IP address, the MAC address and the Nickname can be flexibly selected as the egress information or the ingress information according to the network across which the TRILL data frames span, and a type and length of a value domain of the corresponding options field is defined according to the selected egress information or ingress information.

Third, the IS-IS protocol for the TRILL network is extended, so that the protocol can spread the BRB information.

One or more type-length-values (TLVs) are extended for the IS-IS protocol, and the control information for extending the TLV format is generally generated by the BRB of the local TRILL network, and is used to notify other RBs of the local TRILL network of the ingress BRB of all other TRILL networks which are known by itself. For a RB which supports extending the TLV, the Equal-Cost Multipath Routing (ECMP) information for the RB itself arriving at the BRB included in the TLV will be calculated using the extended TLV, and the information is stored in an ECMP table of the RB itself.

The extended TLV is a sub-TLV of the TLV of the router capability, and has non-critical attributes (if one device such as a RB does not support extending the TLV, the TLV must be transparently transmitted, and after the transparent transmission, the connectivity can be solved by way of manual configuration).

Fourth, the encapsulation and decapsulation as well as route learning capability of the TRILL data frames of the Ingress and Egress are enhanced, which mainly comprises:
when encapsulating the original data frames, if the Ingress finds that the ingress information of the remote TRILL network is included in the table entries for arriving at the destination MAC address in the ECMP table, the ingress information must be added to the ingress sub-option of the remote TRILL network in the TRILL header, otherwise, the TRILL header cannot comprise the sub-option. As the BRB, the Ingress must copy the options field in the original TRILL header to a new TRILL header when re-encapsulating the TRILL data frames from other TRILL networks.

After receiving the TRILL data frames transmitted by the Ingress, the Egress decapsulates the TRILL data frames, and if the Egress finds that the destination MAC address identifying a device which is connected to itself, in addition to the normal learning of the source MAC address, the Egress needs to learn ingress information for arriving at the TRILL network where the source MAC address is located. As the BRB, the Egress also needs to re-encapsulate the TRILL data frames according to the ingress information of the remote TRILL network in the options field of the TRILL header (add the egress information of the local TRILL network in the TRILL header), and transmit the TRILL data frames to the BRB of the remote TRILL network.

Wherein, the RB according to the invention can learn the path information through the control information in a TLV format distributed by the BRB or the received TRILL data frames.

In addition, the specific implementation means of carrying the egress information of the local TRILL network and/or the egress information of the remote TRILL network in the TRILL header comprises:
in the case that the RB learning the path information of the remote network through the control information in a TLV format distributed by the BRB, the RB carries the ingress information of the remote TRILL network through the Egress of the TRILL header, and when the TRILL data frames leave the local network, the BRB of the local network carries the egress information of the local TRILL network through the Ingress of the TRILL header; and in the case that the RB learns the route information by observing the received TRILL data frames, the invention carries the egress information of the local TRILL network and/or ingress information of the remote TRILL network through the sub-option fields of the TRILL header.

Thus, the BRB only needs to maintain the information which is needed for arriving at the BRBs of other TRILL networks, and does not need to maintain the MAC address information for arriving at various devices in other TRILL networks; and in addition, when there are multiple BRBs in one TRILL network, the invention can further designate multiple BRBs as forwarders of different VLANs, and thus, the information for arriving at the BRBs of other TRILL networks which is maintained by each BRB can be reduced, and the load for the ingress and egress of the local TRILL network can be shared at the same time.

The process of transmitting the TRILL data frames across a traditional IP network will be described below in combination with the accompanying drawings; however, the interconnection technology according to the invention is not limited to interconnecting the TRILL networks through the IP network.

FIG. 2 illustrates a diagram of the structure of interconnection of multiple TRILL networks, wherein, hosts H1, H2 and H3 are located in the TRILL network 1, and hosts H4 and H5 are located in the TRILL network 2. In the embodiment, the process of the RB learning the path information by observing the TRILL data frames, and transmitting unicast data frames between H1 and H4 across an IP network by carrying the ingress information of the local TRILL network and/or egress information of the remote TRILL network in the sub-option fields of the TRILL header comprises the following steps:
in step 1, the H1 generates original data frames (unicast data frames) with the destination MAC address being H4 and the source MAC address being itself, and transmits the original data frames to the RB1;
in step 2, the RB1 parses the received original data frames, searches the MAC address information table of itself, finds that the destination MAC address, i.e., H4 is an unknown destination, and encapsulates the original data frames as the TRILL data frames of the unknown destination (at this moment, the RB1 is the Ingress, the Egress is a tree root of a certain distribution tree which arrives at all RBs in the TRILL network; as the destination network is unknown, the RB1 cannot find the table entries for arriving at the destination MAC address in the ECMP table, and therefore, the sub-option fields of the TRILL header cannot include the ingress information of the remote TRILL network, and as the RB1 is not the BRB, the sub-option fields of the TRILL header also does not include the egress information of the local TRILL network; and the inner MAC frame header includes H1 as a source MAC address and H4 as a destination MAC address), and then, the RB1 multicasts the TRILL data frames in the TRILL network 1;
in step 3, after other RBs (RB2 in FIG. 2) except RB1 in the TRILL network 1 receive the TRILL data frames, if the RB itself is not the BRB in the TRILL network 1, no any additional process will be performed on the TRILL data frames except for distributing the TRILL data frames to the downstream of the distribution tree; and if the RB itself is the BRB of the TRILL network 1, step 4 will be performed;
in step 4, assume that the RB2 of the TRILL 1 in FIG. 4 is BRB, after receiving and decapsulating the TRILL data frames, the RB2 searches its MAC address information table, finds that the destination MAC address, i.e., H4 is an unknown destination, and the RB2 re-encapsulates the original data frames (the RB2 is Ingress, the Egress is unknown; the egress information of the local TRILL network, i.e., globally unique identifier of the RB2 is carried in the sub-option fields of the TRILL header, and that sub-option fields does not include ingress information of the remote TRILL network; and the inner MAC frame header includes H1 as a source MAC address and H4 as a destination MAC address); and in addition, as the spanned network is an IP network, it needs to perform IP encapsulation on the TRILL data frames, i.e., adding an IP header before the TRILL header, and then, the RB2 forwards the IP message after IP encapsulation to the BRBs of all other TRILL networks which are known by itself (for example, RB 3, RB 5 of TRILL network 2 and RB 6 of TRILL network 3 in FIG. 2);
in step 5, the IP message is transparently transmitted to the BRBs of other TRILL networks across the IP network, and in the embodiment, the IP message is transparently transmitted to the RB3, RB5 of TRILL network 2 and the RB6 of TRILL network 3. After the BRB of other TRILL networks receive the IP message, if it finds through parsing that TRILL data frames are encapsulated in the inner layer, the BRBs will further decapsulate the TRILL data frames, searches its MAC address information table for the destination MAC address, and if it finds that the destination MAC address is unreachable for the RB6 in the TRILL network 3, the data frames are discarded; if it finds that the destination MAC address is reachable for the RB 3 or RB5 in the TRILL network 2, it searches its ECMP table for the destination MAC address, to find RB4 which is connected to H4, and re-encapsulates the original data frames (the Ingress is RB3 or RB5; Egress is RB4; and the sub-option fields in the TRILL header is copied), and then forwards the re-encapsulated TRILL data frames to the RB4;
in step 6, after receiving the TRILL data frames, the RB4 decapsulates the TRILL header and the inner MAC frame header. The RB4 can learn the following path information through the received TRILL data frames: H1 is located in a remote TRILL network which has RB2 as one of its ingresses, and RB2 can be arrived at through RB3 or RB5 (RB4 learns through the received TRILL data frames which are transmitted by RB3 or RB5); and in addition, Egress, i.e., RB4 will forward to the H4 the original data frames obtained after parsing;
in step 7, after receiving the original data frames, H4 transmits the original data frames which are replied to H1 to RB4, and in step 6, RB4 has learned the path for arriving at RB2 through the TRILL data frames which are transmitted by RB3 or RB5, RB4 encapsulates the replied original data frames according to the learned path information (at this moment, the Ingress is RB4, the Egress is RB3 or RB5; as Ingress, RB4 has learned information for arriving at H1, therefore, the ingress information of the remote TRILL network must be carried in the sub-option fields of the TIRLL header for storing the globally unique identifier of RB2; and the inner MAC frame header includes H4 as a source MAC address and H1 as a destination MAC address), and then the encapsulated TRILL data frames are transmitted to RB3 or RB5 (which is determined according to whether the Egress is RB3 or RB5 in the TRILL data frames);
in step 8, after receiving the TRILL data frames transmitted by RB4 for TRILL decapsulation, if the RB3 or RB5 can determine that the destination network is remote according to the ingress information of the remote TRILL network in the sub-option fields, and it needs to forward the TRILL data frames, the RB3 or RB5 re-encapsulates the original data frames (Ingress is RB3 or RB5; Egress is RB2; the options field in the TRILL header is copied, and the egress information of the local TRILL network, i.e., globally unique identifier of RB3 or RB5 is carried in the sub-option fields; the inner MAC frame header is unchanged), and then searches for the IP path for arriving at RB2 and performs IP encapsulation on the TRILL data frames and then forwards them to RB2 (which is determined according to the Egress being RB2 in the TRILL data frames);
in step 9, after receiving the IP message transmitted by RB3 or RB5, RB2 parses the IP message and then finds that TRILL data frames are encapsulated in the inner layer, continues to decapsulate the TRILL data frames, searches its MAC address information table for the destination MAC address(i.e., H1), finds that H1 is reachable and connected to RB1, RB2 re-encapsulates the original data frames (Ingress is RB2; RB1 is Egress; the sub-option fields in the TRILL header is copied; and the inner MAC frame header is unchanged), and transmits them to RB1 (which is determined according to the Egress being RB1 in the TRILL data frames);
in step 10, after receiving the TRILL data frames transmitted by RB2, RB1 learns the following path information through decapsulation: H4 is at a remote TRILL network, the ingress thereof is RB3 or RB5, can arrive at RB3 or RB5 of the remote TRILL network where H4 is located through RB2 (RB1 learns through received TRILL data frames which are transmitted by RB2); and then transmits the decapsulated original data frames to H1.

Through the above message reception and reply, RB1 and RB4 acquire routes for arriving at H1 and H4 in the remote TRILL network by way of self-learning, then forward the message between H1 and H4 according to the learned route, and the message forwarding procedure after the path is learned is similar to the forwarding procedure of the original data frames which are replied by H4 to H1, and will not be repeated here.

Thus, the embodiment introduces a BRB by carrying egress information of the local TRILL network and ingress information of the remote TRILL network in the options field of the TRILL header, which solves the problem of interconnecting multiple TRILL networks across a traditional network.

Another embodiment of the process of transmitting unicast data frames between H1 and H4 across an IP network will be described below in combination with FIG. 2 again.

In the embodiment, the following operations need to be performed on the control plane first: the BRB of each TRILL network transmitting control information in a TLV (the TLV includes BRB information corresponding to ingresses of other TRILL networks, i.e., the globally unique identifier) format of an ingress of other TRILL networks which are known by itself periodically or after receiving a request from other RBs in the local TRILL network, after receiving these control information in a TLV format, other RBs in the local TRILL network calculating and maintaining ECMP information for arriving at these BRBs according to the BRB information included in the control information in a TLV format, and storing the ECMP information in an ECMP table of itself. Thus, the RB can learn the path information through the control information in a TLV format distributed by the BRB.

In addition, in the embodiment, the egress information of the local TRILL network is carried through Ingress in the TRILL header, and the ingress information of the remote TRILL network is carried through the Egress in the TRILL header.

Based on the above operations of the control plane, the process of transmitting unicast data frames between H1 and H4 across an IP network on the data plane is as follows:
in step 1, the H1 generates original data frames (unicast data frames) with the destination MAC address being H4 and the source MAC address being itself, and transmits the original data frames to the RB1;
in step 2, the RB1 parses the received original data frames, and searches its MAC address information table, finds that the destination MAC address, i.e., H4, is an unknown destination, and encapsulates the original data frames as the TRILL data frames of the unknown destination (the RB1 is the Ingress, the Egress is a tree root of a certain distribution tree which arrive at all RBs in the local TRILL network; as RB1 cannot find the table entries which arrive at the destination MAC address in the ECMP table, the data frames can only be transmitted by way of multicast, and TRILL header cannot include the ingress information of the remote TRILL network, and as the RB1 is not the BRB, the TRILL header also does not include the egress information of the local TRILL network; and the inner MAC frame header includes H1 as a source MAC address and H4 as a destination MAC address), and then, the RB1 multicasts the TRILL data frames in the TRILL network 1;
in step 3, after other RBs (RB2 in FIG. 2) except RB1 in the TRILL network 1 receive the TRILL data frames, if the RB itself is not the BRB in the TRILL network 1, no any additional process will be performed on the TRILL data frames except for distributing the TRILL data frames to the downstream of the distribution tree; and if the RB itself is the BRB of the TRILL network 1, step 4 will be performed;
in step 4, assume that the RB2 of the TRILL 1 in FIG. 4 is BRB, after receiving and decapsulating the TRILL data frames, the RB2 searches the MAC address information table of itself, finds that the destination MAC, i.e., H4, is an un known destination, and the RB2 re-encapsulates the original data frames (the Ingress is a certain globally unique identifier of the RB2, such as Nickname (i.e., carrying the egress information of the local TRILL network); the Egress is unknown; and the inner MAC frame header includes H1 as a source MAC address and H4 as a destination MAC address); in addition, as the spanned network is an IP network, it needs to perform IP encapsulation on the TRILL data frames, i.e., adding an IP header before the TRILL header, and then, the RB2 forwards the IP message after IP encapsulation to the BRBs of all other TRILL networks which are known by itself (for example, RB3, RB5 of TRILL network 2 and RB6 of TRILL network 3 in FIG. 2);
in step 5, the IP message is transparently transmitted to the BRBs of other TRILL networks across the IP network, and in the embodiment, the IP message is transparently transmitted to the RB3, RB5 of TRILL network 2 and the RB6 of TRILL network 3. After the BRBs of other TRILL networks receive the IP message, if it finds through parsing that TRILL data frames are encapsulated in the inner layer, the BRBs will further decapsulate the TRILL data frames, searches its MAC address information table for the destination MAC address, and if it finds that the destination MAC address is unreachable (for example, RB6 in TRILL network 3), the data frames are discarded; if it finds that the destination MAC address is reachable (for example, the RB 3 and RB 5 in the TRILL network 2), for example, RB3 or RB 5 finds the device identified by the destination MAC address ,i.e., H4 is connected to RB4, and re-encapsulates the original data frames (the Ingress remain unchanged and is still RB2; Egress is RB4; and the options field in the TRILL header is copied), and then forwards the re-encapsulated TRILL data frames to the RB4;
in step 6, after receiving the TRILL data frames, the RB4 decapsulates the TRILL header and the inner MAC frame header, and can learn the following path information in combination with the control information in a TLV format distributed by RB3 or RB5 of the control plane: the ingress of the remote TRILL network where the source MAC address H1 is located is RB2 (the information is then stored in the MAC table of itself), can arrive at RB2 through RB3 or RB5 as determined by calculation (the calculated path for arriving at RB2 is stored in the ECMP table itself); and in addition, Egress, i.e., RB4 will forward the original data frames which are obtained after being parsed to the H4;
in step 7, after receiving the original data frames, H4 will transmit the original data frames which are replied to H1 to RB4, and RB4 will encapsulate the replied original data frames according to the learned path information in step 6 (the Ingress is RB4; as Ingress, RB4 can find in the MAC table of itself that the egress for arriving at H1 is RB2 and therefore, Egress is RB2 (ingress information of the remote TRILL network); and the inner MAC frame header includes H4 as a source MAC address and H1 as a destination MAC address), and then the encapsulated TRILL data frames are transmitted to RB3 or RB5 hop by hop (which is determined by RB 4 according to the ECMP table entries for arriving at RB2 in the ECMP table of itself);
in step 8, after receiving the TRILL data frames transmitted by RB4 for TRILL decapsulation, if the RB3 or RB5 finds that Egress (i.e., RB2) is the ingress of the remote TRILL network and it needs to forward the TRILL data frames, the RB3 or RB5 re-encapsulates the original data frames (Ingress is RB3 or RB5; Egress is unchanged and is RB2; the options field in the TRILL header is copied; the inner MAC frame header is unchanged), and then searches for the IP path for arriving at RB2 and performs IP encapsulation on the TRILL data frames and then forwards them to RB2;
in step 9, after receiving the IP message transmitted by RB3 or RB5, RB2 parses the IP message and then finds that TRILL data frames are encapsulated in the inner layer, continues to decapsulate the TRILL data frames, finds that the Egress is itself, and searches its MAC address information table of itself according to the destination MAC address (i.e., H1), finds that the destination MAC address is reachable and RB1 is the RB which is connected to the device identified by the destination MAC address, i.e., H1, RB2 re-encapsulates the original data frames (Ingress is unchanged and is RB3 or RB5; Egress is RB1; the options field in the TRILL header is copied; and the inner MAC frame header is unchanged), and transmits them to RB1;
in step 10, RB1 receives and then decapsulates the TRILL data frames transmitted by RB2, and learns the following path information in combination with the control information in a TLV format distributed by RB2 of the control plane: the ingress of the remote TRILL network where H4 is located is RB3 or RB5 (the information is stored in the MAC table of itself), can arrive at RB3 or RB5 through RB2 as determined by calculation (the calculated path for arriving at RB3 or RB5 is stored in the ECMP table itself); and then transmits the decapsulated original data frames to H1.

Through the above notification and/or message transmission/reply of the control plane, RB1 and RB4 acquire paths for arriving at H1 and H4 in the remote TRILL network by way of self-learning, then implement the forwarding of the message between H1 and H4 according to the learned path, and the message forwarding procedure after the path is learned is similar to the forwarding procedure of the original data frames which are replied by H4 to H1, and will not be repeated here.

In the embodiment, the BRB is introduced by carrying egress information of the local TRILL network through Ingress in the TRILL header and carrying ingress information of the remote TRILL network through the Egress in the TRILL header, which solves the problem of interconnecting multiple TRILL networks across a traditional network.

It can be known from the above embodiments, the BRB in the invention only needs to locally maintain the information for arriving at the BRBs of other TRILL networks without maintaining the MAC address information for arriving at various devices in other TRILL networks, which solves the problem of mass MAC address information when a large number of TRILL networks are interconnected.

In addition, the technical solution of the invention further has the following advantages:
1) A concept of the hierarchy (at least two layers) is introduced in the interconnection of TRILL networks: a network comprised of all BRBs can be considered as one super TRILL network, a normal TRILL network is connected below each BRB, and normal TRILL networks are interconnected through the super TRILL network;
2) Independence of each TRILL network is maintained: the TRILL networks are independent from each other logically, the RB information in one TRILL network will not be leaked to other TRILL networks, which is beneficial for the network security;
3) There is very good extensibility: the interconnection of multiple TRILL networks can further be implemented through the nest of the ingress information of the TRILL network (options are added in the options field); and multiple forwarding controls such as Type of Service (TOS) etc. can be implemented by carrying information such as other service types etc. in the options field,.
4) The scale of the network interconnection is expanded, a large scale interconnection of many TRILL networks can be implemented by introducing the concept of hierarchy, and the forwarding burden of BRBs will not be increased significantly;
5) The interconnection of TRILL networks can be implemented across multiple networks: if it is across the IP network, the common IP of the BRB can be used as the egress and ingress information of the TRILL network; if it is a VPLS (Virtual Private LAN Service) network, the MAC address information of the BRB can be used as the egress and ingress information of the TRILL network; and in order to span across multiple heterogeneous networks, the Nickname which is unique globally of the BRB can be used as the egress and ingress information of the TRILL network.

In order to implement the above interconnection method, the invention provides a system of TRILL network interconnection, comprising: a BRB and a RB, wherein, when being located within a first TRILL network, the BRB is used to receive TRILL data frames transmitted by a second TRILL network and forward the TRILL data frames;
when being located within the first TRILL network, the RB is used to receive the TRILL data frames transmitted by the BRB, learn path to the second TRILL network through control information in a TLV format distributed by the BRB or by observing the TRILL data frames, and forward decapsulated original data frames to a device identified by the destination MAC address; and is further used to encapsulate the TRILL data frames according to the learned path information, and transmit the TRILL data frames to the second TRILL network through the BRB, wherein, the BRB is an egress and ingress of the TRILL network; and at least one interface of the BRB is located within the TRILL network, and at least one interface is located within other non-TRILL networks; and
the BRB has at least one globally unique identifier, which is an IP address or a MAC address or a Nickname.

When being located within the second TRILL network, the BRB is further used to: when receiving the TRILL data frames which leave the local TRILL network, re-encapsulate the received TRILL data frames, carry the egress information of the local TRILL network in the TRILL header of the TRILL data frames, and transfer the re-encapsulated TRILL data frames to the BRB of the first TRILL network through other non-TRILL networks;
the egress information of the local TRILL network is a globally unique identifier of the egress BRB of the local TRILL network.

When being located within the first TRILL network, the BRB is further used to: after receiving the TRILL data frames transmitted by the second network and encapsulating the data frames, search a MAC address information table of itself for the destination MAC in the inner MAC frame header, and acquire a reachable RB connected to the device identified by the destination MAC address; and is further used to re-encapsulate the received TRILL data frames, and forward the re-encapsulated TRILL data frames to the RB connected to the destination MAC. In the case that the RB of the first TRILL network learns the path to the second TRILL network by observing the TRILL data frames, when re-encapsulating the received TRILL data frames, the BRB located within the first TRILL network is further used to set the Ingress as itself, set the egress as the RB connected to the device identified by the destination MAC address, maintain the sub-option fields of the TRILL header in the TRILL data frames unchanged, and maintain the inner MAC frame header in the TRILL data frames unchanged;
in the case that the RB of the first TRILL network learns the path to the second TRILL network through the control information in a TLV format distributed by the BRB, when re-encapsulating the received TRILL data frames, the BRB located within the first TRILL network is further used to maintain the ingress unchanged, set the Egress as the RB connected to the destination MAC address, maintain the sub-option fields of the TRILL header in the TRILL data frames unchanged, and maintain the inner MAC frame header in the TRILL data frames unchanged.

When being located within the first TRILL network and is Ingress, the RB is further used to encapsulate the TRILL data frames according to the learned path information, carry the ingress information of the remote TRILL network in the TRILL header; the ingress information of the remote TRILL network is a globally unique identifier of the ingress BRB of the second TRILL network; and transmit the encapsulated TRILL data frames to the BRB of the first TRILL network according to the learned path information; and
correspondingly, when being located within the first TRILL network, the BRB is further used to transmit the received TRILL data frames to the BRB of the second TRILL network through other non-TRILL network.

The egress information of the local TRILL network and the ingress information of the remote TRILL network are carried in the TRILL header of the TRILL data frames, comprising:
the RB of the first TRILL network carrying the ingress information of the remote TRILL network in the Egress and the sub-option fields of the TRILL header of the TRILL data frames; and when the TRILL data frames leave the local network, the BRB carrying the egress information of the local TRILL network in the Ingress of the TRILL header.

The BRB is further used to advertise self-originated control information in a TLV format including the ingress BRB of other TRILL networks which are known by itself periodically or respond to the received request from other RBs within the local TRILL network, to notify other RBs of the local TRILL network of the ingress BRB of all the other TRILL networks which are known by itself;
the RB is further used to calculate the ECMPs to the RB arriving at the BRB included in the TLV, and store the ECMPs in its ECMP table, after receiving the control information in a TLV format.

The above description is only preferable embodiments of the invention, and is not used to limit the protection scope of the invention.

## Claims

1. A method for Transparent Interconnection of Lots of Links (TRILL) network interconnection, comprising the following steps of:
a Border RBridge (BRB) of a first TRILL network receiving TRILL data frames transmitted by a second TRILL network, and forwarding the TRILL data frames;
a RBridge (RB) of the first TRILL network receiving the TRILL data frames transmitted by the BRB, learning path to the second TRILL network through control information in a Type-Length-Value TLV format distributed by the BRB or by observing the TRILL data frames, and forwarding decapsulated original data frames to a device identified by a destination MAC address; and
the RB encapsulating the TRILL data frames according to the learned path information, and transmitting the TRILL data frames to the second TRILL network through the BRB;
wherein, the BRB is an egress and ingress of the TRILL network; and
at least one interface of the BRB is located within the TRILL network, and
at least one interface is located within other non-TRILL networks; and
the BRB has at least one globally unique identifier, which is an IP address or a MAC address or a Nickname.

2. The method according to claim 1, wherein, the method further comprises:
carrying egress information of a local TRILL network and/or ingress information of a remote TRILL network in a TRILL header of the TRILL data frames.

3. The method according to claim 2, wherein,
in the case that the RB of the first TRILL network learns the path to the second TRILL network through the control information in the TLV format distributed by the BRB, the ingress information of the remote TRILL network are carried in Egress field of the TRILL header of the TRILL data frames; and when the TRILL data frames leave the local TRILL network,
the BRB of the local TRILL network carries the egress information of the local TRILL network in Ingress field in the TRILL header of the TRILL data frames; and
in the case that the RB of the first TRILL network learns the path to the second TRILL network through the TRILL data frames, the egress information of the local TRILL network and/or the ingress information of the remote TRILL network are carried through a sub-option field of the TRILL header.

4. The method according to claim 1, wherein, the method further comprises:
the BRB advertising self-originated control information in the TLV format including the ingress BRB of other TRILL networks known by the BRB itself periodically or responding to the received request from other RBs within the local TRILL network, to notify other RBs of the local TRILL network of the ingress BRB of all other TRILL networks which are known by the BRB itself;
after receiving the control information in the TLV format, the RB calculating Equal-Cost Multipaths (ECMP) to the BRB included in the TLV, and
storing them in its ECMP table.

5. The method according to,claim 2 or 4, wherein, the method further comprises: the second TRILL network transmitting the TRILL data frames to the first TRILL network, comprising:
when receiving the TRILL data frames which leave the local TRILL network, the BRB of the second TRILL network re-encapsulating the received TRILL data frames, carrying the egress information of the local TRILL network in the TRILL header of the TRILL data frames, and transferring the re-encapsulated TRILL data frames to the BRB of the first TRILL network through other non-TRILL networks.

6. The method according to claim 5, wherein, the step of the BRB of the first TRILL network forwarding the received TRILL data frames comprises:
after receiving and decapsulating the TRILL data frames, the BRB of the first TRILL network searching its MAC address information table for the destination MAC address in the inner data frame header, and acquiring a reachable RB connected to device identified by the destination MAC address;
the BRB of the first TRILL network re-encapsulating the received TRILL data frames, and forwarding the re-encapsulated TRILL data frames to the RB connected to the destination device.

7. The method according to claim 6, wherein,
in the case that the RB learns the path to the second TRILL network by observing the TRILL data frames, the step of the BRB of the first TRILL network re-encapsulating the received TRILL data frames comprises:
setting the Ingress as the BRB of the first TRILL network, setting the Egress as the RB connected to the device identified by the destination MAC address, maintaining the sub-option fields of the TRILL header in the TRILL data frames unchanged, and maintaining an inner MAC frame header in the TRILL data frames unchanged;
in the case that RB learns the path to the second TRILL network through the control information in the TLV format distributed by the BRB, the step of the BRB of the first TRILL network re-encapsulating the received TRILL data frames comprises: maintaining the Ingress unchanged, setting the Egress as the RB connected to the device identified by the destination MAC address; maintaining the sub-option fields of the TRILL header in the TRILL data frames unchanged, and maintaining the inner MAC frame header in the TRILL data frames unchanged;
or
the step of the RB of the first TRILL network encapsulating the TRILL data frames according to the learned path information comprises: when the RB of the first TRILL network is Ingress, carrying the ingress information of the remote TRILL network in the TRILL header, preferably, the RB of the first TRILL network transmits the encapsulated TRILL data frames to the BRB of the first TRILL network according to the learned path information,
and then the TRILL data frames are re-encapsulated and transferred by the DRB to the BRB of the second TRILL network through other non-TRILL networks.

8. A system for TRILL network interconnection, comprising: a BRB and a RB, wherein,
when located within a first TRILL network, the BRB is configured to receive TRILL data frames transmitted by a second TRILL network and forward the TRILL data frames;
when located within the first TRILL network, the RB is configured to receive the TRILL data frames transmitted by the BRB, learn path to the second TRILL network through control information in a Type-Length-Value TLV format distributed by the BRB or by observing the TRILL data frames, and forward the decapsulated original data frames to a device identified by a destination MAC address; and the RB is further configured to encapsulate the TRILL data frames according to the learned path information, and transmit the TRILL data frames to the second TRILL network through the BRB;
wherein, the BRB is an egress and ingress of the TRILL network; and
at least one interface of the BRB is located within the TRILL network, and at least one interface is located within other non-TRILL networks; and the BRB has at least one globally unique identifier, which is an IP address or a MAC address or a Nickname.

9. The system according to claim 8, wherein,
when located within the second TRILL network, the BRB is further configured to: when receiving the TRILL data frames which leave a local TRILL network, re-encapsulate the received TRILL data frames, carry egress information of the local TRILL network in a TRILL header of the TRILL data frames, and transfer the re-encapsulated TRILL data frames to the BRB of the first TRILL network through other non-TRILL networks; the egress information of the local TRILL network is a globally unique identifier of egress BRB of the local TRILL network.

10. The system according to claim 9, wherein,
when located within the first TRILL network, the BRB is further configured to: after receiving the TRILL data frames transmitted by the second network and decapsulating the TRILL data frames, search its MAC address information table for the destination MAC in the inner MAC frame header,
and acquire a reachable RB connected to a device identified by the destination MAC address; and the BRB is further configured to re-encapsulate the received TRILL data frames, and forward the re-encapsulated TRILL data frames to the RB connected to the destination device.

11. The system according to claim 10, wherein,
in the case that the RB of the first TRILL network learns the path to the second TRILL network by observing the TRILL data frames, when re-encapsulating the received TRILL data frames, the BRB located within the first TRILL network is further configured to set the Ingress as the BRB located within the first TRILL network, set the Egress as the RB connected to the device identified by the destination MAC address, maintain sub-option fields of the TRILL header in the TRILL data frames unchanged, and maintain an inner MAC frame header in the TRILL data frames unchanged;
in the case that the RB of the first TRILL network learns the path to the second TRILL network through the control information in the TLV format distributed by the BRB, when re-encapsulating the received TRILL data frames, the BRB located within the first TRILL network is further configured to maintain the Ingress unchanged, set the Egress as the RB connected to the device identified by the destination MAC address, maintain the sub-option fields of the TRILL header in the TRILL data frames unchanged, and maintain the inner MAC frame header in the TRILL data frames unchanged;
or
when the RB located within the first TRILL network and is Ingress, the RB is further configured to encapsulate the TRILL data frames according to the learned path information, and carry ingress information of a remote TRILL network in the TRILL header; the ingress information of the remote TRILL network is a globally unique identifier of ingress BRB of the second TRILL network; and transmit the encapsulated TRILL data frames to the BRB of the first TRILL network according to the learned path information; correspondingly, when located within the first TRILL network, the BRB is further configured to transmit the received TRILL data frames to BRB of the second TRILL network through other non-TRILL networks, preferably, the egress information of the local TRILL network and the ingress information of the remote TRILL network are carried in the TRILL header of the TRILL data frames, comprising:
the RB of the first TRILL network carrying the ingress information of the remote TRILL network in the sub-option fields of the TRILL header of the TRILL data frames; and when the TRILL data frames leave the local network, the BRB carrying the egress information of the local TRILL network through the Ingress of the TRILL header.

12. The system according to claim 8, wherein,
the BRB is further configured to advertise self-originated control information in the TLV format including ingress BRB of other TRILL networks known by the BRB itself periodically or respond to the received request from other RBs within the local TRILL network, to notify other RBs of the local TRILL network of the ingress BRB of all other TRILL networks which are known by the BRB itself; and
the RB is further configured to calculate ECMPs to BRBs included in the TLV, and store the ECMPs in its ECMP table, after receiving the control information in the TLV format.

## Patentansprüche

1. Verfahren zum transparenten Zusammenschalten von Netzwerken mit vielen Verbindungen (Transparent Interconnection of Lots of Links-TRILL), welches die folgenden Schritte aufweist:
eine Grenz-R-Brücke (BRB) eines ersten TRILL-Netzwerks, das von einem zweiten TRILL-Netzwerk übermittelte Datenframes empfängt und
die TRILL-Datenframes weiterleitet;
eine R-Brücke (RB) des ersten TRILL-Netzwerks, das die von der BRB übermittelten TRILL-Datenframes empfängt, welche den Pfad zu dem zweiten TRILL-Netzwerk durch Steuerinformationen im TLV-Format, einem Format mit Typ-Längenwert, lernt, das von der BRB verbreitet wird,
oder durch Beobachten der TRILL-Datenframes, und zum Weiterleiten entkapselter Original-Daten an ein von einer MAC-Ziel-Adresse identifiziertes Gerät; und
bei welchem die RB die TRILL-Datenframes entsprechend der erlernten Pfadinformation verkapselt und die TRILL-Datenframes durch die BRB an das zweite TRILL-Netzwerk übermittelt;
wobei die BRB einen Ausgang und Eingang des TRILL-Netzwerks darstellt; und
mindestens eine Schnittstelle der BRB innerhalb des TRILL-Netzwerks angeordnet ist und mindestens eine Schnittstelle innerhalb anderer Netzwerke als TRILL-Netzwerken angeordnet ist; und
wobei die BRB mindestens eine global einzige Kennung besitzt, bei der es sich um eine IP-Adresse oder eine MAC-Adresse oder einen Phantasie- bzw. Spitznamen handelt.

2. Verfahren nach Anspruch 1, welches außerdem folgendes aufweist:
Mitführen von Eingangsinformationen eines lokalen TRILL-Netzwerks und/oder Eingangsinformationen eines entfernten TRILL-Netzwerks in einem TRILL-Vorsatz der TRILL-Datenframes.

3. Verfahren nach Anspruch 2, bei welchem
in dem Fall, in dem die RB des ersten TRILL-Netzwerks den Pfad zum zweiten TRILL-Netzwerk durch die Steuerinformationen in dem von der BRB verbreiteten TLV-Format erlernt, die Eingangsinformationen des entfernten TRILL-Netzwerks im Ausgangsfeld des TRILL-Vorsatzes der TRILL-Datenframes mitgeführt werden; und in dem Fall, in dem die TRILL-Datenframes das lokale TRILL-Netzwerk verlassen, die BRB des lokalen TRILL-Netzwerks die Ausgangsinformationen des lokalen TRILL-Netzwerks im Eingangsfeld im TRILL-Vorsatz der TRILL-Datenframes mitführt; und
in dem Fall, in dem die RB des ersten TRILL-Netzwerks den Pfad zum zweiten TRILL-Netzwerk durch die TRILL-Datenframes erlernt, werden die Ausgangsinformationen des lokalen TRILL-Netzwerks und/oder die Eingangsinformationen des entfernten TRILL-Netzwerks über ein Unteroptionsfeld des TRILL-Vorsatzes mitgeführt.

4. Verfahren nach Anspruch 1, welches des Weiteren folgendes umfasst:
die selbstgenerierten Steuerinformationen zur BRB-Anzeige im TLV-Format, welche die Eingangs-BRB anderer, dem BRB selbst periodisch oder im Ansprechen auf die empfangene Anforderung von anderen RBs innerhalb des lokalen TRILL-Netzwerks bekannten TRILL-Netzwerke beinhalten, zur Benachrichtigung anderer RBs des lokalen TRILL-Netzwerks über die Eingangs-BRB aller anderen TRILL-Netzwerke, die der BRB selbst bekannt sind;
nach Empfang der Steuerinformationen im TLV-Format berechnet die RB die Equal-Cost-Multipaths (ECMP) an die im TLV-Format eingeschlossene BRB du speichert diese dann in ihrer ECMP-Tabelle ab.

5. Verfahren nach Anspruch 2 oder 4, welches des Weiteren folgendes umfasst:
das zweite TRILL-Netzwerk, welches die TRILL-Datenframes an das erste TRILL-Netzwerk überträgt, umfasst:
beim Empfangen der TRILL-Datenframes, welche das lokale TRILL-Netzwerk verlassen, verkapselt die BRB des zweiten TRILL-Netzwerks erneut die empfangenen TRILL-Datenframes und führt die Ausgangsinformationen des lokalen TRILL-Netzwerks im TRILL-Vorsatz der TRILL-Datenframes mit und überträgt die erneut verkapselten TRILL-Datenahmen an die BRB des ersten TRILL-Netzwerks über andere Netzwerke als TRILL-Netzwerke.

6. Verfahren nach Anspruch 5, bei welchem der Schritt, bei dem die BRB des ersten TRILL-Netzwerks, das die empfangenen TRILL-Datenframes weiterleitet, folgendes umfasst:
nach dem Empfangen und Entkapseln der TRILL-Datenframes sucht die BRB des erstes TRILL-Netzwerks, das seine Tabelle mit MAC-Adressen-Informationen für die MAC-Zieladresse im inneren Datenframes-Vorsatz sucht, und eine erreichbare RB erlangt, die mit dem durch die MAC-Zieladresse identifizierte Gerät verbunden ist.

7. Verfahren nach Anspruch 6, bei welchem
in dem Fall, in dem die RB den Pfad zum zweiten TRILL-Netzwerk durch Beobachten der TRILL-Datenframes erlernt, der Schritt, bei dem die BRB des ersten TRILL-Netzwerks die empfangenen TRILL-Datenframes erneut verkapselt, folgendes umfasst:
Setzen des Eingangs als BRB des ersten TRILL-Netzwerks, Setzen des Ausgangs als RB, die mit dem von der MAC-Zieladresse identifizierten Gerät verbunden ist, Aufrechterhalten der Sub-Options-Felder des TRILL-Vorsatzes in den TRILL-Datenframes in unverändertem Zustand, und Aufrechterhalten eines inneren Mac-Frames-Vorsatzes in den TRILL-Datenframes in unverändertem Zustand;
in dem Fall, in dem die RB den Pfad zum zweiten TRILL-Netzwerk über die Steuerinformationen im TLV-Format erlernt, die von der BRB verbreitet werden, der Schritt der BRB des ersten TRILL-Netzwerks, das die empfangenen TRILL-Datenframes erneut verkapselt, folgendes umfasst: Aufrechterhalten des Eingangs in unverändertem Zustand, Setzen des Ausgangs als die RB, die mit dem von der MAC-Ziel-Adresse identifizierten Gerät verbunden ist; Aufrechterhalten der Sub-Options-Felder des TRILL-Vorsatzes in den TRILL-Datenframes in unverändertem Zustand, und Aufrechterhalten des inneren MAC-Frames-Vorsatzes in den TRILL-Datenframes in unverändertem Zustand;
oder
der Schritt, bei dem die RB des ersten TRILL-Netzwerks, welche die TRILL-Datenframes entsprechend den erlernten Pfad-Informationen folgendes umfasst: wenn die RB des ersten TRILL-Netzwerks der Eingang ist, Mitführen der Eingangs-Informationen des entfernten TRILL-Netzwerks im TRILL-Vorsatz, überträgt vorzugsweise die RB des ersten TRILL-Netzwerks die verkapselten TRILL-Datenframes entsprechend den erlernten Pfad-Informationen an die BRB des ersten TRILL-Netzwerks, und werden dann die TRILL-Datenframes erneut verkapselt von der DRB an die BRB des zweiten TRILL-Netzwerks über andere Netzwerke als TRILL-Netzwerke übertragen.

8. System zum transparenten Zusammenschalten von Netzwerken mit vielen Verbindungen (Transparent Interconnection of Lots of Links-TRILL), welches folgendes umfasst: eine BRB und eine RB, und bei welchem
dann, wenn sie sich innerhalb eines ersten TRILL-Netzwerks befindet, ist die BRB zum Empfangen von TRILL-Datenframes konfiguriert, die von einem zweiten TRILL-Netzwerk gesendet wurden, sowie zum Weiterleiten der TRILL-Datenframes;
wenn sie sich innerhalb des ersten TRILL-Netzwerks befindet, ist die RB zum Empfangen von TRILL-Datenframes konfiguriert, die von einem zweiten TRILL-Netzwerk gesendet wurden, sowie zum Erlernen des Pfads zum zweiten TRILL-Netzwerk durch Steuerinformationen im TLV-Format, einem Format mit Typ-Längenwert, lernt, das von der BRB verbreitet wird, oder durch Beobachten der TRILL-Datenframes, und zum Weiterleiten der entkapselten Original-Daten an ein von einer MAC-Ziel-Adresse identifiziertes Gerät; und bei welchem die RB weiterhin so konfiguriert ist, dass sie die TRILL-Datenframes entsprechend der erlernten Pfadinformation verkapselt und die TRILL-Datenframes durch die BRB an das zweite TRILL-Netzwerk übermittelt;
wobei die BRB einen Ausgang und Eingang des TRILL-Netzwerks darstellt; und mindestens eine Schnittstelle der BRB innerhalb des TRILL-Netzwerks angeordnet ist und mindestens eine Schnittstelle innerhalb anderer Netzwerke als TRILL-Netzwerken angeordnet ist; und wobei die BRB mindestens eine global einzige Kennung besitzt, bei der es sich um eine IP-Adresse oder eine MAC-Adresse oder einen Phantasie- bzw. Spitznamen handelt.

9. System nach Anspruch 8, bei welchem
Dann, wenn sie sich innerhalb des zweiten TRILL-Netzwerks befindet, die BRB weiterhin dazu konfiguriert ist, beim Empfangen der TRILL-Datenframes, die ein lokales TRILL-Netzwerk verlassen, die empfangenen TRILL-Datenframes erneut zu verkapseln, Ausgangsinformationen des lokalen TRILL-Netzwerks in einem TRILL-Vorsatz der TRILL-Datenframes mitzuführen und die erneut verkapselten TRILL-Datenframes an die BRB des ersten TRILL-Netzwerks durch andere Netzwerke als TRILL-Netzwerke zu übertragen;
wobei die Ausgangsinformationen des lokalen TRILL-Netzwerks eine global einmalige Kennung der Ausgangs-BRB des lokalen TRILL-Netzwerks sind.

10. System nach Anspruch 9, bei welchem
Dann, wenn sie sich innerhalb des ersten TRILL-Netzwerks befindet, die BRB außerdem dazu konfiguriert ist, nach dem Empfangen der TRILL-Datenframes, die von dem zweiten Netzwerk übermittelt wurden, und nach dem Entkapseln der TRILL-Datenframes nach ihrer MAC-Adressen-Informations-Tabelle für die Ziel-NAC in dem inneren MAC-Frames-Vorsatz zu suchen und eine erreichbare RB zu erlangen, die mit einem Gerät verbunden ist, das durch die MAC-Zieladresse identifiziert wird; und die BRB außerdem dazu konfiguriert ist, die empfangenen TRILL-Datenframes erneut zu verkapseln und die neu verkapselten TRILL-Datenframes an die mit dem Zielgerät verbundene RB weiterzuleiten.

11. System nach Anspruch 10, bei welchem
in dem Fall, dass die RB des ersten TRILL-Netzwerks den Pfad zum zweiten TRILL-Netzwerk durch Beobachten der TRILL-Datenframes erlernt, wenn die empfangenen TRILL-Datenframes erneut verkapselt werden, die innerhalb des ersten TRILL-Netzwerks vorhandene BRB des Weiteren so konfiguriert ist, dass der Eingang als BRB gesetzt wird, die sich innerhalb des ersten TRILL-Netzwerks befindet, dass der Ausgang als RB gesetzt wird, der mit dem von der MAC-Zieladresse identifizierten Gerät verbunden ist, dass die Sub-Options-Felder des TRILL-Vorsatzes in den TRILL-Datenframes unverändert gehalten und ein innerer Mac-Frame-Vorsatz in den TRILL-Datenrahmen unverändert gehalten wird;
in dem Fall, dass die RB des ersten TRILL-Netzwerks den Pfad zu dem zweiten TRILL-Netzwerk durch die Steuerinformationen in dem von der BRB verbreiteten TLV-Format lernt, wenn die empfangenen TRILL-Datenframes erneut verkapselt werden, die innerhalb des ersten TRILL-Netzwerks befindliche BRB außerdem dazu konfiguriert wird, den Eingang unverändert zu halten, den Ausgang als RB zu setzen, die mit dem von der MAC-Zieladresse identifizierten Gerät verbunden ist, die Sub-Options-Felder des TRILL-Vorsatzes in den TRILL-Datenrahmen unverändert aufrecht zu erhalten und den inneren MAC-Frame-Vorsatz in den TRILL-Datenframe unverändert zu halten;
oder
dann, wenn sich die RB innerhalb des ersten TRILL-Netzwerks befindet und den Eingang darstellt, die RB außerdem dazu konfiguriert ist, die TRILL-Datenframes entsprechend den erlernten Pfadinformationen zu verkapseln und Eingangsinformationen eines entfernten TRILL-Netzwerks in dem TRILL-Vorsatz mitzuführen, wobei die Eingangsinformationen des entfernten TRILL-Netzwerks eine global einmalige Kennung der Eingangs-BRB des zweiten TRILL-Netzwerks darstellen; und die verkapselten TRILL-Datenframes entsprechend den erlernten Pfad-Informationen an die BRB des ersten TRILL-Netzwerks zu übermitteln; und dementsprechend dann, wenn sie sich innerhalb des ersten TRILL-Netzwerks befindet, die BRRB außerdem dazu konfiguriert ist, die empfangenen TRILL-Datenframes an die BRB des zweiten TRILL-Netzwerks durch andere Netzwerke als TRILL-Netzwerke zu übertragen, wobei vorzugsweise die Ausgangsinformationen des lokalen TRILL-Netzwerks und die Eingangsinformationen des entfernten TRILL-Netzwerks in dem TRILL-Vorsatz der TRILL-Datenframes mitgeführt werden,
und welches folgendes umfasst:
die RB des ersten TRILL-Netzwerks führt die Eingangsinformationen des entfernten TRILL-Netzwerks in den Sub-Options-Feldern des TRILL-Vorsatzes der TRILL-Datenframes mit und dann, wenn die TRILL-Datenframes das lokale Netzwerk verlassen, führt die BRB die Ausgangsinformationen des lokalen TRILL-Netzwerks durch den Eingang des TRILL-Vorsatzes mit.

12. System nach Anspruch 8, bei welchem
die BRB außerdem so konfiguriert ist, dass sie selbst-erzeugte Steuerinformationen im TLV-Format ankündigt und dabei die Eingangs-BRB anderer TRILL-Netzwerke einbezieht, die der BRB selbst periodisch oder im Ansprechen auf die empfangene Anforderung von anderen RBs innerhalb des lokalen TRILL-Netzwerks bekannt sind, um anderen RBs des lokalen TRILL-Netzwerks die Eingangs-BRB aller anderen TRILL-Netzwerke mitzuteilen, die der BRB selbst bekannt sind; und
die RB außerdem so konfiguriert ist, dass sie ECMPs an BRBs berechnet, die in dem TLV-Format einbezogen sind, und die ECMPs in ihrer ECMP-Tabelle abspeichert, nachdem sie die Steuerinformationen im TLV-Format empfangen hat.

## Revendications

1. Procédé d'interconnexion transparente d'une interconnexion de réseau à nombreuses liaisons (TRILL), qui comprend les étapes suivantes qui consistent en ce que:
un Border RBridge (BRB) d'un premier réseau TRILL reçoit des trames de données TRILL transmises par un second réseau TRILL, et envoie les trames de données TRILL;
un RBridge (RB) d'un premier réseau TRILL reçoit les trames de données TRILL transmises par le BRB, apprend le chemin vers le second réseau TRILL à l'aide d'informations de contrôle au format TLV (Type-Length-Value) distribuées par le BRB, ou en observant les trames de données TRILL, et envoie les trames de données d'origine décapsulées vers un dispositif identifié par une adresse MAC de destination; et
le RB encapsule les trames de données TRILL selon les informations du chemin appris, et transmet les trames de données TRILL au second réseau TRILL à l'aide du BRB;
dans lequel le BRB est une sortie et une entrée du réseau TRILL; et
au moins une interface du BRB se trouve sur le réseau TRILL, et au moins une interface se trouve sur d'autres réseaux non-TRILL; et
le BRB possède au moins un identifiant globalement unique, qui est une adresse IP ou une adresse MAC ou un pseudo.

2. Procédé selon la revendication 1, qui comprend en outre:
l'acheminement des informations de sortie d'un réseau TRILL local et/ou des informations d'entrée d'un réseau TRILL distant au sein d'un en-tête TRILL des trames de données TRILL.

3. Procédé selon la revendication 2, dans lequel lorsque le RB du premier réseau TRILL apprend le chemin vers le second réseau TRILL à l'aide des informations de contrôle au format TLV distribuées par le BRB, les informations d'entrée du réseau TRILL distant sont acheminées dans le champ de sortie de l'en-tête TRILL des trames de données TRILL; et lorsque les trames de données TRILL quittent le réseau TRILL local, le BRB du réseau TRILL local achemine les informations de sortie du réseau TRILL local dans le champ d'entrée de l'en-tête TRILL des trames de données TRILL; et
lorsque le RB du premier réseau TRILL apprend le chemin vers le second réseau TRILL à l'aide des trames de données TRILL, les informations de sortie du réseau TRILL local et/ou les informations d'entrée du réseau TRILL distant sont acheminées par un champ de sous-option de l'en-tête TRILL.

4. Procédé selon la revendication 1, qui comprend en outre:
le fait que le BRB annonce les informations de contrôle au format TLV fournies par lui-même, et qui comprennent le BRB d'entrée des autres réseaux TRILL connus par le BRB lui-même de manière périodique, ou réponde à la requête reçue de la part des autres RB du réseau TRILL local, afin d'informer les autres RB du réseau TRILL local du BRB d'entrée de tous les autres réseaux TRILL qui sont connus par le BRB lui-même;
le fait que, après avoir reçu les informations de contrôle au format TLV, le RB calcule des trajets multiples à coût égal (ECMP) vers le BRB inclus aux informations au format TLV, et les mémorise dans sa table ECMP.

5. Procédé selon la revendication 2 ou 4, qui comprend en outre: le fait que le second réseau TRILL transmette les trames de données TRILL au premier réseau TRILL, qui comprend:
le fait que, lors de la réception des trames de données TRILL qui quittent le réseau TRILL local, le BRB du second réseau TRILL ré-encapsule les trames de données TRILL reçues, acheminent les informations de sortie du réseau TRILL local au sein de l'en-tête TRILL des trames de données TRILL, et transfère les trames de données TRILL ré-encapsulées vers le BRB du premier réseau TRILL par le biais d'autres réseaux non-TRILL.

6. Procédé selon la revendication 5, dans lequel l'étape au cours de laquelle le BRB du premier réseau TRILL envoie les trames de données TRILL reçues comprend ce qui suit:
après la réception et la décapsulation des trames de données TRILL, le BRB du premier réseau TRILL consulte sa table d'informations d'adresse MAC afin de trouver l'adresse MAC de destination au sein de l'en-tête de trame de données interne, et acquière un RB joignable relié à un dispositif identifié par l'adresse MAC de destination;
le BRB du premier réseau TRILL ré-encapsule les trames de données TRILL reçues, et envoie les trames de données TRILL ré-encapsulées au RB relié au dispositif de destination.

7. Procédé selon la revendication 6, dans lequel:
lorsque le RB apprend le chemin vers le second réseau TRILL en observant les trames de données TRILL, l'étape qui consiste en ce que le BRB du premier réseau TRILL ré-encapsule les trames de données TRILL reçues comprend ce qui suit:
la définition de l'entrée comme BRB du premier réseau TRILL, la définition de la sortie comme RB relié au dispositif identifié par l'adresse MAC de destination, le maintien des champs de sous-option de l'en-tête TRILL au sein des trames de données TRILL sans les modifier, et le maintien d'un en-tête de trame MAC interne au sein des trames de données TRILL sans le modifier;
lorsque le RB apprend le chemin vers le second réseau TRILL à l'aide des informations de contrôle au format TLV distribuées par le BRB, l'étape qui consiste en ce que le BRB du premier réseau TRILL ré-encapsule les trames de données TRILL reçues comprend ce qui suit:
le maintien de l'entrée sans la modifier, la définition de la sortie comme RB relié au dispositif identifié par l'adresse MAC de destination; le maintien des champs de sous-option de l'en-tête TRILL au sein des trames de données TRILL, sans les modifier, et le maintien de l'en-tête de trame MAC interne au sein des trames de données TRILL, sans le modifier;ou
l'étape qui consiste en ce que le RB du premier réseau TRILL encapsule les trames de données TRILL selon les informations du chemin appris comprend ce qui suit: lorsque le RB du premier réseau TRILL est l'entrée, l'acheminement des informations d'entrée du réseau TRILL distant au sein de l'en-tête TRILL; de préférence, le RB du premier réseau TRILL transmet les trames de données TRILL encapsulées au BRB du premier réseau TRILL selon les informations du chemin appris, puis les trames de données TRILL sont ré-encapsulées et transférées par le DRB vers le BRB du second réseau TRILL par le biais d'autres réseaux non-TRILL.

8. Système d'interconnexion réseau TRILL, qui comprend: un BRB et un RB, dans lequel
lorsqu'il se trouve sur un premier réseau TRILL, le BRB est configuré pour recevoir des trames de données TRILL transmises par un second réseau TRILL, et pour envoyer les trames de données TRILL; lorsqu'il se trouve sur le premier réseau TRILL, le RB est configuré pour recevoir les trames de données TRILL transmises par le BRB, pour apprendre le chemin vers le second réseau TRILL à l'aide d'informations de contrôle au format TLV (Type-Length-Value) distribuées par le BRB ou en observant les trames de données TRILL, et pour envoyer les trames de données d'origine décapsulées vers un dispositif identifié par une adresse MAC de destination; et le RB est configuré pour encapsuler les trames de données TRILL selon les informations du chemin appris, et pour transmettre les trames de données TRILL vers le second réseau TRILL à l'aide du BRB; dans lequel le BRB est une sortie et une entrée du réseau TRILL; et au moins une interface du BRB se trouve sur le réseau TRILL, et au moins une interface se trouve sur d'autres réseaux non-TRILL; et le BRB possède au moins un identifiant globalement unique, qui est une adresse IP ou une adresse MAC ou un pseudo.

9. Système selon la revendication 8, dans lequel:
lorsqu'il se trouve sur le second réseau TRILL, le BRB est en outre configuré: lors de la réception des trames de données TRILL qui quittent un réseau TRILL local, pour ré-encapsuler les trames de données TRILL reçues, acheminer les informations de sortie du réseau TRILL local au sein d'un en-tête TRILL des trames de données TRILL, et transférer les trames de données TRILL ré-encapsulées vers le BRB du premier réseau TRILL par le biais d'autres réseaux non-TRILL;
les informations de sortie du réseau TRILL local sont un identifiant globalement unique du BRB de sortie du réseau TRILL local.

10. Système selon la revendication 9, dans lequel:
lorsqu'il se trouve sur le premier réseau TRILL, le BRB est en outre configuré: après la réception des trames de données TRILL transmises par le second réseau et la décapsulation des trames de données TRILL, pour consulter sa table d'informations d'adresse MAC afin de trouver l'adresse MAC de destination au sein de l'en-tête de trame MAC interne, et pour acquérir un RB joignable relié à un dispositif identifié par l'adresse MAC de destination; et le BRB est en outre configuré pour ré-encapsuler les trames de données TRILL reçues, et pour envoyer les trames de données TRILL ré-encapsulées au RB relié au dispositif de destination.

11. Système selon la revendication 10, dans lequel:
lorsque le RB du premier réseau TRILL apprend le chemin vers le second réseau TRILL en observant les trames de données TRILL, lors de la ré-encapsulation des trames de données TRILL reçues, le BRB qui se trouve sur le premier réseau TRILL est en outre configuré pour définir l'entrée comme BRB qui se trouve sur le premier réseau TRILL, pour définir la sortie comme RB relié au dispositif identifié par l'adresse MAC de destination, pour maintenir les champs de sous-option de l'en-tête TRILL au sein des trames de données TRILL, sans les modifier, et pour maintenir un en-tête de trame MAC interne au sein des trames de données TRILL, sans le modifier;
lorsque le RB du premier réseau TRILL apprend le chemin vers le second réseau TRILL à l'aide des informations de contrôle au format TLV distribuées par le BRB, lors de la ré-encapsulation des trames de données TRILL reçues, le BRB qui se trouve sur le premier réseau TRILL est en outre configuré pour maintenir l'entrée inchangée, pour définir la sortie comme RB relié au dispositif identifié par l'adresse MAC de destination, pour maintenir les champs de sous-option de l'en-tête TRILL au sein des trames de données TRILL, sans les modifier, et pour maintenir l'en-tête de trame MAC interne au sein des trames de données TRILL, sans le modifier;
ou
lorsque le RB se trouve sur le premier réseau TRILL et correspond à l'entrée, le RB est en outre configuré pour encapsuler les trames de données TRILL selon les informations du chemin appris, et pour acheminer les informations d'entrée d'un réseau TRILL distant au sein de l'en-tête TRILL, les informations d'entrée du réseau TRILL distant étant un identifiant globalement unique du BRB d'entrée du second réseau TRILL; et pour transmettre les trames de données TRILL encapsulées vers le BRB du premier réseau TRILL selon les informations du chemin appris; ainsi, lorsqu'il se trouve sur le premier réseau TRILL, le BRB est en outre configuré pour transmettre les trames de données TRILL reçues vers le BRB du second réseau TRILL par le biais d'autres réseaux non-TRILL; de préférence, les informations de sortie du réseau TRILL local et les informations d'entrée du réseau TRILL distant sont acheminées au sein de l'en-tête TRILL des trames de données TRILL:
le RB du premier réseau TRILL achemine les informations d'entrée du réseau TRILL distant au sein des champs de sous-option de l'en-tête TRILL des trames de données TRILL; et, lorsque les trames de données TRILL quittent le réseau local, le BRB achemine les informations de sortie du réseau TRILL local par le biais de l'entrée de l'en-tête TRILL.

12. Système selon la revendication 8, dans lequel:
le BRB est en outre configuré pour annoncer les informations de contrôle au format TLV fournies par lui-même, et qui comprennent le BRB d'entrée des autres réseaux TRILL connus par le BRB lui-même de manière périodique, ou répond à la requête reçue de la part des autres RB du réseau TRILL local, afin d'informer les autres RB du réseau TRILL local du BRB d'entrée de tous les autres réseaux TRILL qui sont connus par le BRB lui-même; et
le RB est en outre configuré pour calculer des trajets multiples à coût égal (ECMP) vers le BRB inclus aux informations au format TLV, et pour mémoriser les ECMP dans sa table d'ECMP, après avoir reçu les informations de contrôle au format TLV.
